(19) 

Europäisches
Patentamt
European
Patent Office
Office européen
des brevets

(11) **EP 4 644 319 A1**

(12) **EUROPEAN PATENT APPLICATION**
published in accordance with Art. 153(4) EPC

(43) Date of publication:
**05.11.2025 Bulletin 2025/45**

(21) Application number: **23912872.1**

(22) Date of filing: **26.12.2023**

(51) International Patent Classification (IPC):
**C01B 32/33** $^{(2017.01)}$

(52) Cooperative Patent Classification (CPC):
**C01B 32/33; Y02E 60/10**

(86) International application number:
**PCT/KR2023/021570**

(87) International publication number:
**WO 2024/144197 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 KR 20220184112**

(71) Applicant: **Hanwha Solutions Corporation**
**Jung-gu**
**Seoul 04541 (KR)**

(72) Inventors:
• **JEON, Hyo Jin**
  **Seoul 04541 (KR)**

• **KIM, Eui Duk**
  **Seoul 04541 (KR)**
• **PARK, Sarang**
  **Seoul 04541 (KR)**
• **KIM, Do Heung**
  **Seoul 04541 (KR)**
• **IM, Jangbin**
  **Daejeon 34128 (KR)**
• **JANG, Dawon**
  **Seoul 04541 (KR)**
• **YIM, Kyoungwon**
  **Seoul 04541 (KR)**

(74) Representative: **Berggren Oy**
**P.O. Box 16**
**Fabianinkatu 21**
**00101 Helsinki (FI)**

(54) **METHOD FOR PRODUCING POROUS CARBON SUPPORT AND POROUS CARBON SUPPORT PRODUCED THEREBY**

(57) The present invention relates to a method for producing a porous carbon support, comprising the steps of (1) synthesizing pitch by pyrolysis and condensation polymerization of a petroleum-based raw material, (2) solidifying the pitch to obtain a solid-phase pitch, and (3) producing a carbon support from the solid-phase pitch, wherein the pitch in step (1) satisfies the following relational formula 1. [Relational formula 1] $S/S_P \times 100 + MP \le 0.5$ In relational formula 1, S is the mass ratio of saturated hydrocarbons derived from a saturates-aromatics-resins-asphaltenes (SARA) analysis of the synthesized pitch, SP is a softening point of the pitch, and MP is the volume ratio of anisotropic (mesophase) content in the synthesized pitch.

[FIG. 1]

**Description**

## TECHNICAL FIELD

The present invention relates to a method for producing a porous carbon support and a porous carbon support produced thereby.

## BACKGROUND ART

Carbon materials are materials made of carbon, which is one of the most common resources on Earth. Carbon materials are very light and strong, and have excellent electrical and thermal conductivity, making them a key material that is widely used in hydrogen cars, aviation, secondary batteries and high-end consumer goods.

Carbon materials can be manufactured from various raw materials such as palm kernel shells, polyacrylonitrile, rayon and pitch. Among these, carbon materials manufactured from solid raw materials such as palm kernel shells are difficult to control in terms of molecular weight and composition (Korean Patent Laid-Open Publication No. 10-2019-0093960).

On the other hand, pitch, which is a viscoelastic solid polymer that is extracted from crude oil or plants, has the advantage of high yield when it is converted to carbon materials and low-cost raw materials, and the molecular structure thereof is closer to the graphite structure than other raw materials, which reduces the energy required for heat treatment (US Patent Nos. 4,242,196 and 4,340,464).

In particular, pyrolysis fuel oil (PFO), naphtha cracking bottom oil (NCB), vacuum residue (VR) and fluid catalytic cracking decant oil (FCC-DO), which are obtained as by-products in the petroleum refining process, have a high content of aromatic compounds and a low content of impurities such as sulfur and nitrogen, and therefore, pitch manufactured therefrom is attracting attention as a material for carbon materials.

## DISCLOSURE

## TECHNICAL PROBLEM

One of several objects of the present invention is to provide a method for producing a porous carbon support having controlled pore characteristics such that sufficient deposition can be performed into deep pores during chemical vapor deposition, and a porous carbon support produced therefrom.

One of several objects of the present invention is to provide a method for producing a porous carbon support that is capable of producing a negative electrode material having high charge/discharge capacity, and a porous carbon support produced therefrom.

One of several objects of the present invention is to provide a method for producing a porous carbon support that is capable of producing a negative electrode material having improved cycle characteristics, and a porous carbon support produced therefrom.

One of several objects of the present invention is to provide a method for producing a porous carbon support that is capable of producing a negative electrode material having excellent mechanical properties, and a porous carbon support produced therefrom.

## TECHNICAL SOLUTION

According to an exemplary embodiment of the present invention, the present invention may provide a method for producing a porous carbon support, including (1) synthesizing pitch by pyrolysis and condensation polymerization of a petroleum-based raw material; (2) solidifying the pitch to obtain a solid-phase pitch; and (3) producing a carbon support from the solid-phase pitch, wherein the pitch in step (1) satisfies Relationship Formula 1 below:

$$[\text{Relationship Formula 1}]$$

$$S/S_P \times 100 + MP \leq 0.5$$

In Relationship Formula 1 above, S is the mass ratio of saturated hydrocarbons derived from a saturates-aromatics-resins-asphaltenes (SARA) analysis of the synthesized pitch, SP is a softening point of the pitch, and MP is the volume ratio of anisotropic (mesophase) content in the synthesized pitch.

In this case, a condensation polymerization temperature of the synthesizing pitch in step (1) may be within a range of 300°C or more and/or 450°C or less.

In an example of the present invention, a softening point of the pitch synthesized in step (1) of the method for producing a porous carbon support according to the present invention may be 200°C or more.

In an example, a ratio of saturated hydrocarbons in the pitch synthesized in step (1) of the method for producing a porous carbon support according to the present invention may be 0.6 mass% or less based on the entire pitch.

In another example, a ratio of asphaltene in the pitch synthesized in step (1) of the method for producing a porous carbon support according to the present invention may be 30 mass% or less based on the entire pitch.

Meanwhile, the (3) producing a carbon support may include stabilizing, carbonizing and activating the solid-phase pitch.

In an example, the method for producing a porous carbon support according to the present invention may further include depositing silicon on the porous carbon support.

In this case, the depositing may be performed at a temperature of 300°C or more and/or 600°C or less and under a silane ($SiH_4$) gas atmosphere of 50 sccm or more and/or 500 sccm or less.

In this case, a content of the silicon may be 10 wt% or more based on the weight of the entire support.

An exemplary embodiment of the present invention may provide a porous carbon support produced by the method for producing a porous carbon support described above.

An exemplary embodiment of the present invention may provide a battery negative electrode material, including the above-described porous carbon support.

## ADVANTAGEOUS EFFECTS

One of the effects of the present invention is that it can provide a method for producing a porous carbon support in which mesopores are formed in the outer portion and micropores are formed in the inner portion such that silicon can be sufficiently deposited into the inner pores, and a porous carbon support produced therefrom.

One of the effects of the present invention is that it can provide a method for producing a porous carbon support that is capable of manufacturing a negative electrode material having high charge/discharge capacity, and a porous carbon support produced therefrom.

One of the effects of the present invention is that it can provide a method for producing a porous carbon support that is capable of manufacturing a negative electrode material having improved cycle characteristics, and a porous carbon support produced therefrom.

One of the effects of the present invention is that it can provide a method for producing a porous carbon support that is capable of manufacturing a negative electrode material having excellent mechanical properties, and a porous carbon support produced therefrom.

However, various advantageous and beneficial advantages and effects of the present invention are not limited to the above-described contents, and will be more easily understood in the process of describing specific embodiments of the present invention.

## DESCRIPTION OF DRAWINGS

FIG. 1 is a graph showing the results of SARA analysis for porous carbon supports produced in the examples and comparative examples.
FIG. 2 is an SEM image of carbon-silicon composite particles produced in Experimental Example 1.
FIG. 3 is an SEM image of carbon-silicon composite particles produced in Experimental Example 2.

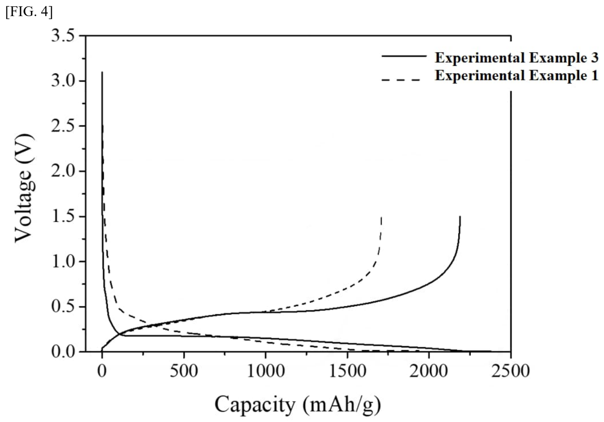

FIG. 4 is a graph showing the results of electrochemical evaluation after producing half-coin cells using the porous carbon supports of Experimental Examples 1 and 3, respectively.

## BEST MODE

Hereinafter, embodiments of the present invention will be described with reference to specific embodiments and the attached drawings. It should be understood that this is not intended to limit the technology described in the present specification to specific embodiments, but includes various modifications, equivalents and/or alternatives of the embodiments of the present invention. In connection with the description of the drawings, similar reference numerals may be used for similar components.

Additionally, in order to clearly explain the present invention in the drawings, parts that are not related to the description are omitted, and the thickness is enlarged to clearly express various layers and regions, and components with the same function within the scope of the same idea can be described by using the same reference numerals.

In the present specification, expressions such as "have", "may have", "include", or "may include" indicate the presence of a corresponding feature (e.g., a component such as a number, function, operation or part), and do not exclude the presence of additional features.

In the present specification, the expressions "A or B", "at least one of A or/and B", or "one or more of A or/and B" and the like may include all possible combinations of the items listed together. For example, "A or B", "at least one of A and B", or "at least one of A or B" may refer to all cases where (1) at least one of A is included, (2) at least one of B is included, or (3) at least one of A and at least one of B is included.

All numbers and expressions indicating the amounts of components, reaction conditions and the like described in the present specification should be understood to be modified by the term "about" in all cases unless otherwise stated.

The present invention relates to a method for producing a porous carbon support. The method for producing a porous carbon support according to an embodiment of the present invention may include (1) synthesizing pitch by pyrolysis and condensation polymerization of a petroleum-based raw material; (2) solidifying the pitch to obtain a solid-phase pitch; and (3) producing a carbon support from the solid-phase pitch.

In this case, the pitch in step (1) may satisfy Relationship Formula 1 below.

$$[\text{Relationship Formula 1}]$$

$$S/S_P \times 100 + MP \leq 0.5$$

In Relationship Formula 1 above, S is the mass ratio of saturated hydrocarbons derived from a saturates-aromatics-resins-asphaltenes (SARA) analysis of the synthesized pitch, SP is a softening point of the pitch, and MP is the volume ratio of anisotropic (mesophase) content in the synthesized pitch.

Hereinafter, each step of the present invention will be described in detail.

Step (1)

In step (1) above, pitch may be synthesized by pyrolysis and condensation polymerization of a petroleum-based raw material.

In a specific embodiment of the present invention, the petroleum-based raw material may include at least one selected from the group consisting of pyrolysis fuel oil (PFO), naphtha cracking bottoms (NCB), ethylene cracker bottom oil (EBO), vacuum residue (VR), de-asphalted oil (DAO), atmospheric residue (AR), residue fluid catalytic cracking decant oil (RFCC-DO) and heavy aromatic oil. In a preferred specific embodiment of the present invention, the petroleum-based raw material may include pyrolysis fuel oil.

In a specific embodiment of the present invention, the pyrolysis and condensation polymerization of the petroleum-based raw material may be performed at a temperature of 300°C or more and/or 450°C or less. The above pyrolysis and condensation polymerization temperature may be 300°C or more, 310°C or more, 320°C or more, 330°C or more, 340°C or more or 350°C or more, and may be 450°C or less, 440°C or less, 430°C or less or 420°C or less, but is not limited thereto. When the pyrolysis and condensation polymerization temperature satisfies the above ranges, a pitch including a large amount of relatively low molecular weight components may be manufactured. In addition, during the activation process described below, components having relatively small molecular weights are vaporized first, thereby sufficiently forming mesopores in the carbon support. If the pyrolysis and condensation polymerization temperature of the petroleum-based raw material is too low, it may be difficult to manufacture a solid-phase pitch at room temperature, and if the temperature is too high, relatively high molecular weight components may be included in the pitch in large amounts, making it impossible to produce a carbon support having mesopores.

In a specific embodiment of the present invention, the pyrolysis and condensation polymerization of the petroleum-based raw material may be performed under an atmosphere of an oxidizing gas, an inert gas or a mixture thereof. In a preferred embodiment of the present invention, the oxidizing gas may be oxygen, ozone or a combination thereof, the inert gas may be nitrogen, helium, neon, argon or a combination thereof, and the mixture thereof may be air, but is not particularly limited thereto.

In a specific embodiment of the present invention, the above gas may be supplied at a flow rate of 10 to 800 mL/min during the pyrolysis and condensation polymerization of the petroleum-based raw material. In a preferred embodiment of the present invention, the above gas may be supplied at a flow rate of 100 to 500 mL/min during the pyrolysis and condensation polymerization of the petroleum-based raw material. If the flow rate of the above gas is less than 10 mL/min, the yield of the pitch increases, but the low molecular weight components increase too much, which is disadvantageous for the subsequent process (e.g., stabilization). If the flow rate of the above gas exceeds 800 mL/min, the yield of the pitch may be reduced.

In a specific embodiment of the present invention, the pyrolysis and condensation polymerization of the petroleum-based raw material may be performed for 1 to 10 hours. In a preferred specific embodiment of the present invention, the pyrolysis and condensation polymerization of the petroleum-based raw material may be performed for 2 to 8 hours. In a more preferred specific embodiment of the present invention, the pyrolysis and condensation polymerization of the petroleum-based raw material may be performed for 2 to 7 hours. If the pyrolysis and condensation polymerization time of the petroleum-based raw material is less than 1 hour, it is difficult to manufacture a pitch having a high softening point, and if the pyrolysis and condensation polymerization time of the petroleum-based raw material exceeds 10 hours, an excessive amount of quinoline insoluble components may be generated.

In a specific embodiment of the present invention, the pyrolysis and condensation polymerization of the petroleum-based raw material may be performed under stirring. The stirring conditions of the petroleum-based raw material are not particularly limited, but for example, a stirrer rotating at 10 to 500 rpm may be used.

In a specific embodiment of the present invention, the pitch synthesized in step (1) may have a softening point of 200 to 350°C. In a preferred specific embodiment of the present invention, the pitch may have a softening point of 200 to 330°C. In a more preferred specific embodiment of the present invention, the pitch may have a softening point of 200 to 300°C. Since the pitch manufactured according to the present invention has a high softening point, when it is used as a precursor for producing a carbon support, the stabilization process is easy, and it is possible to obtain a high yield after carbonization and activation.

In a specific embodiment of the present invention, the yield of the pitch synthesized in step (1) may be 10 to 50 wt%. In another specific embodiment of the present invention, the yield of the pitch may be 10 to 40 wt%.

In a specific embodiment of the present invention, the pitch synthesized in step (1) may exhibit a mesophase including an isotropic component and an anisotropic component. In the method for producing a porous carbon support from a petroleum-based raw material according to an embodiment of the present invention, the pitch synthesized in step (1) is centrifuged at a high temperature such that even without a separate optical microscope measurement, the content of each of the isotropic component and the anisotropic component in the pitch may be measured. In addition, by combining this data with the SARA analysis results described below, the specific surface area, tap density, average particle size and pore characteristics of the porous carbon support produced from the pitch may be predicted, and based on this, at least one process variable of step (1) may be adjusted to control the specific surface area, tap density, average particle size and pore characteristics of the porous carbon support.

In the above example, the content of the mesophase of the pitch synthesized in step (1) may be 0.2 or less. In the present specification, the mesophase may mean an intermediate phase between an isotropic liquid phase and a crystalline solid phase, and may mean a pitch in which numerous aromatic hydrocarbons including isotropic liquid-crystalline (carbonaceous mesophase) particles are complexly mixed. The content of the mesophase may be 0.2 or less (20 vol% or less), 0.15 or less (15 vol% or less) or 0.1 or less (10 vol% or less) based on the volume of the entire pitch, and the lower limit is not particularly limited, but may be, for example, 0 or more (0 vol% or more) or more than 0 (more than 0 vol%). If the ratio of the content of the mesophase of the pitch is too high, the possibility of producing crystalline carbon may increase, and pores may not be formed well when producing a carbon support.

The content of the mesophase of the above pitch may be a value measured through high-temperature centrifugation. Specifically, the target temperature of the high-temperature centrifugation is set to 350 to 360°C, which is slightly higher than the approximate temperature of 340°C at which the anisotropic component of the pitch to be analyzed begins to melt, and the temperature is increased at a rate of about 15°C/min. When the device reaches the target temperature, the pitch is centrifuged for 15 to 30 minutes. After centrifugation, the tube and the pitch inside the tube are ground together to confirm that the isotropic and anisotropic components are separated, and the anisotropic content may be calculated by measuring the area of each.

In the process of producing a porous carbon support from a petroleum-based raw material according to an embodiment of the present invention, pretreating the petroleum-based raw material may be performed before step (1) above. By removing the low-boiling-point component included in the petroleum-based raw material through the pretreating, a pitch having a higher softening point may be manufactured.

In a specific embodiment of the present invention, the pretreating may be performed at a temperature equal to or less than the pyrolysis and condensation polymerization temperature of the petroleum-based raw material in step (1), but is not particularly limited to this condition. Specifically, the pretreating may be performed at 250 to 450°C, preferably 250 to 400°C, and more preferably 300 to 400°C.

In a specific embodiment of the present invention, the pretreating may be performed for a time equal to or shorter than the pyrolysis and condensation polymerization time of the petroleum-based raw material in step (1), but is not particularly limited to this condition. Specifically, the pretreating may be performed for 1 to 8 hours, preferably 1 to 6 hours, and more preferably 1 to 5 hours.

The pitch of step (1) of the method for producing a porous carbon support according to the present invention may satisfy Relationship Formula 1.

[Relationship Formula 1]

$$S/S_P \times 100 + MP \leq 0.5$$

In Relationship Formula 1 above, S is the mass ratio of saturated hydrocarbons derived from a saturates-aromatics-resins-asphaltenes (SARA) analysis of the synthesized pitch, SP is a softening point of the pitch, and MP is the volume ratio of anisotropic (mesophase) content in the synthesized pitch.

SARA may refer to an analysis method that divides pitches according to polarizability and polarity. The saturated fraction may be composed of nonpolar substances including linear, branched and cyclic saturated hydrocarbons (paraffins). Aromatics including one or more aromatic rings may exhibit slightly more polarity. The remaining two fractions, resins and asphaltenes, may have polar substituents. The difference between the two is that asphaltene is insoluble in excess heptane (or pentane), whereas the resin can be miscible with heptane (or pentane).

The above $S/S_P \times 100 + MP$ may be 0.50 or less, 0.49 or less, 0.48 or less, 0.47 or less, 0.46 or less, or 0.45 or less, and the lower limit is not particularly limited, but may be, for example, 0 or more or more than 0. When $S/S_P \times 100 + MP$ in step 1 of the method for producing a porous carbon support according to the present invention satisfies the above range, a porous carbon support having a high mesopore ratio while being capable of stabilization may be produced. In addition, when the $S/S_P \times 100 + MP$ value in step 1 is too large, the degree of polymerization of the pitch may be reduced and the softening point may be lowered.

In one example of the present invention, the ratio of saturated hydrocarbons in the pitch synthesized in step (1) may be 0.6 mass% or less. The lower limit of the ratio of saturated hydrocarbons in the pitch synthesized in step (1) may be, for example, 0 mass% or more or more than 0 mass%, but is not limited thereto. When the content of saturated hydrocarbons in the pitch synthesized in step (1) satisfies the above range, the pore characteristics of the produced porous carbon support may be adjusted to an appropriate range.

In another example, the ratio of aromatic compounds in the pitch synthesized in step (1) may be 60 mass% or more. The aromatic compounds may be compounds having 1 to 4 aromatic rings. Specifically, the aromatic compounds may include at least one selected from the group consisting of substituted or unsubstituted benzene, naphthalene, phenanthrene, indene, biphenyl, anthracene, tetralin and fluorene. The upper limit of the content of the above aromatic compound is not particularly limited, but may be, for example, 75 mass% or less. When the content of the aromatic compounds satisfies the above range, it may be advantageous in obtaining a porous carbon support having controlled pore characteristics.

Additionally, in another example, the ratio of asphaltene in the pitch synthesized in step (1) of the method for producing a porous carbon support according to the present invention may be 30 mass% or less. The lower limit of the content of the asphaltene may be, for example, 20 mass% or more, but is not limited thereto. When the content of the asphaltene in the pitch synthesized in step (1) is too low, a pitch having a molecular weight of the desired level may not be produced, and when it is too high, the content of the mesophase may be excessively high or the development of pores may be deteriorated when producing a porous carbon support.

In the method for producing a porous carbon support according to the present invention, the content of the resin may be a remainder of the saturated hydrocarbons, aromatic compounds and asphaltene of the above-described pitch. For example, when the total content of the saturated hydrocarbons, aromatics compounds and asphaltene is 95 mass%, the content of the resin may be 5 mass%.

If the results of the SARA analysis of the method for producing a porous carbon support according to the present invention satisfy the above numerical values, a porous carbon support having controlled pore characteristics may be obtained even if the solid pitch pellets described below are stabilized, carbonized and activated without separately pulverizing the same.

Step (2)

In step (2) of the process for producing a porous carbon support from a petroleum-based raw material according to an embodiment of the present invention, the pitch may be solidified to obtain a solid-phase pitch.

The liquid-phase pitch obtained in step (1) is solidified, for example, by extrusion and cooling, to obtain solid pitch pellets. The process of extruding and cooling liquid-phase pitch to obtain solid-phase pitch may be performed by using a commercialized device. For example, this process may be performed by using a double belt cooler & flaker of IPCO, but is not particularly limited to this device.

The pitch obtained in step (2) has an average particle size of 1 to 30 mm, and preferably 5 to 25 mm. When the average particle size of the pitch is within this range, if the pitch is directly used to produce a porous carbon support through step (3) described below, the pore characteristics are excellent such that it can be effectively used for various purposes.

However, if necessary, the pitch obtained in step (2) may be additionally crushed or pulverized and classified. The pitch may be further finely divided through crushing or pulverization, and the particle size distribution of the pitch may be uniform through classification. Herein, the classification may be dry classification, wet classification or classification using a sieve. By crushing or pulverizing and classification treatment, powder pitch having a diameter of 50 to 500 $\mu$m may be obtained.

Step (3)

Step (3) of the method for producing a porous carbon support according to the present invention may be a step of stabilizing a solid-phase pitch. Specifically, it may be a step of stabilizing the structure of the pitch by first oxidizing the solid-phase pitch. If the solid-phase pitch is pulverized in step (2), this step may be a step of stabilizing the pulverized powder pitch.

First of all, the pitch obtained in step (2) is primarily oxidized to stabilize the carbon structure of the pitch.

In a specific embodiment of the present invention, the stabilization of the pitch may be performed under an oxidizing gas atmosphere. In a preferred specific embodiment of the present invention, the stabilization of the pitch may be performed under an air atmosphere, but is not particularly limited thereto.

In a specific embodiment of the present invention, the stabilization of the pitch may be performed at a temperature of 100 to 500°C, preferably 150 to 300°C. When the stabilization of the pitch is performed at this temperature, the carbon structure in the pitch changes from thermoplastic to thermosetting such that the structure can be stably maintained during the subsequent carbonization process. In this case, the temperature increase rate may be 2 to 10°C/min. If this temperature increase rate is too slow, the productivity is poor, and if the temperature increase rate is too fast, uniform stabilization treatment may be difficult.

In a specific embodiment of the present invention, the stabilization of the pitch may be performed at a pressure of 0.1 to 10 bar, and preferably 0.5 to 5 bar. When the stabilization of the pitch is performed at this pressure, the structure of the carbon inside the pitch may be sufficiently stabilized.

In a specific embodiment of the present invention, the stabilization of the pitch may be performed under a flow rate condition of an oxidizing gas, preferably air or oxygen, of 0.1 to 500 mL/min, and preferably 1 to 300 mL/min. When the stabilization of the pitch is performed under this oxidizing gas flow condition, the structure of the pitch may be sufficiently stabilized up to the carbon inside the pitch.

In a specific embodiment of the present invention, the stabilization of the pitch may be performed for 1 to 10 hours, and preferably 2 to 8 hours. When the stabilization of the pitch is performed for this time, the structure of the pitch may be sufficiently stabilized up to the carbon inside the pitch.

Subsequently, the stabilized pitch is carbonized to obtain a carbonized body. Through the carbonization of the pitch, other functional groups included in the pitch are removed, and a carbonized body composed of substantially pure carbon may be obtained.

In a specific embodiment of the present invention, the carbonization of the pitch may be performed under an inert gas atmosphere. In a preferred specific embodiment of the present invention, the carbonization of the pitch may be performed under a nitrogen or argon atmosphere, but is not particularly limited thereto.

In a specific embodiment of the present invention, the carbonization of the pitch may be performed at a temperature of more than 700°C and less than or equal to 1,000°C, and preferably 800 to 900°C. If the temperature during carbonization of the pitch is lower than this range, carbonization may not be sufficient, and if the temperature during carbonization of the pitch is higher than this range, the carbonization yield may decrease.

In a specific embodiment of the present invention, the carbonization of the pitch may be performed under the condition of a flow rate of an inert gas, preferably nitrogen, at 0.1 to 30 mL/min, and preferably 0.1 to 10 mL/min. When the carbonization of the pitch is performed under this inert gas flow rate condition, the pitch may be sufficiently carbonized.

In a specific embodiment of the present invention, the carbonization of the pitch may be performed for 0.5 to 5 hours, and preferably 1 to 3 hours. When the carbonization of the pitch is performed during this time, the pitch may be sufficiently carbonized.

Next, the carbonized body (carbonized pitch pellet) is activated to obtain a porous carbon support. By activating the carbonized body, pores are formed in the pitch pellet, thereby obtaining a porous carbon support.

In a specific embodiment of the present invention, the activation of the carbonized body may be performed under an oxidizing gas atmosphere. In a preferred specific embodiment of the present invention, the activation of the carbonized body may be performed under a steam atmosphere, but is not particularly limited thereto.

In a specific embodiment of the present invention, the activation of the carbonized body may be performed at a temperature of more than 700°C and less than or equal to 1,000°C, and preferably 800 to 900°C. When the activation of the carbonized body is performed at this temperature, a porous carbon support in which micropores and mesopores are sufficiently formed may be obtained.

In a specific embodiment of the present invention, the activation of the carbonized body may be performed at a pressure of 0.1 to 10 bar, and preferably 0.1 to 5 bar. When the activation of the carbonized body is performed at this pressure, a porous carbon support in which micropores and mesopores are sufficiently formed may be obtained.

In a specific embodiment of the present invention, the activation of the carbonized body may be performed under a flow rate condition of an oxidizing gas, preferably water vapor, at 0.1 to 100 mL/min, and preferably 0.1 to 50 mL/min. When the activation of the carbonized body is performed under this oxidizing gas flow condition, a porous carbon support in which micropores and mesopores are sufficiently formed may be obtained.

In a specific embodiment of the present invention, the activation of the carbonized body may be performed for 0.5 to 5 hours, and preferably 1 to 3 hours. When the activation of the carbonized body is performed during this time, a porous carbon support in which micropores and mesopores are sufficiently formed may be obtained.

In a specific embodiment of the present invention, the stabilization, carbonization and activation of the pitch may each be performed in a heating furnace using microwaves. In a preferred specific embodiment of the present invention, the stabilization, carbonization and activation of the pitch may all be performed in a heating furnace using microwaves. The heating furnace using microwaves is preferable because it can increase the temperature of the pitch itself without increasing the external temperature of the pitch, but is not particularly limited thereto.

In a specific embodiment of the present invention, the stabilization, carbonization and activation of the pitch may be performed continuously in one device. In a preferred embodiment of the present invention, stabilization, carbonization and activation of the pitch may be performed continuously in one rotary kiln, but is not particularly limited to this device. Since stabilization, carbonization and activation of the pitch are performed continuously in one device, optimization of the process may be achieved.

In one example of the present invention, the method for producing a porous carbon support according to the present invention may further include depositing silicon on the porous carbon support produced after step (3).

In this case, the deposition may be performed at a temperature of 300°C or more and/or 600°C or less and under a silane ($SiH_4$) gas atmosphere of 50 sccm or more and/or 500 sccm or less. The deposition may utilize, for example, chemical vapor deposition (CVD) and may be performed under atmospheric pressure conditions, but is not limited thereto. By the deposition, silicon may be deposited on the surface and inside the pores of the porous carbon support according to the present invention.

In addition, the present invention relates to a porous carbon support. The porous carbon support according to the present invention may be produced by the method described above.

In one example of the present invention, the porous carbon support according to the present invention may have a ratio of the volume of mesopores to the volume of the entire pores of 0.1 or more. The pores of the porous carbon support may be classified into micropores having a diameter of less than 2 nm, mesopores having a diameter of 2 nm to 50 nm, and macropores having a diameter of more than 50 nm, depending on their size. Such porous supports have been studied in the direction of increasing the ratio of micropores to increase the specific surface area or increasing the ratio of macropores to increase the amount of material carried inside the pores. However, when there are many micropores, it is difficult for silicon to be deposited inside the pores, which causes a problem of reduced electrical capacity. In addition, when there are many macropores, silicon may be aggregated, which may cause stress during repeated charge/discharge processes that may mechanically damage the negative electrode material.

On the other hand, in the case of mesopores, silicon may be sufficiently deposited in the cores of pores when depositing silicon. The porous carbon support according to the present invention may deposit a sufficient amount of silicon inside the pores of the porous support by including mesopores within a predetermined range.

The ratio of the volume of the mesopores to the volume of the entire pores of the porous carbon support may be 0.10 or more, 0.12 or more, 0.14 or more, or 0.15 or more, but is not limited thereto. The upper limit of the ratio of the mesopores to the entire pores of the porous carbon support is not particularly limited, but may be, for example, 1.0 or less or less than 1.0. When the ratio of the mesopores to the entire pores of the porous carbon support satisfies the above range, it may have excellent electrical properties while preventing excessive aggregation of silicon, thereby preventing damage due to volume expansion of silicon.

In an embodiment of the present invention, the tap density of the porous carbon support according to the present invention may be 0.7 g/mL or less. The tap density of the porous carbon support may be a value measured by using PT-TD200 (Pharma Test). Specifically, 40 mL of the porous carbon support is loaded into a cylinder and tapped 1,000 times, and the first volume is observed. After the observation, tapping is performed 1,000 times again, and the volume is observed. This process is repeated three times until there is no difference from the previous volume, and then, the tap density may be calculated as the final volume. The tap density of the porous carbon support may be 0.70 g/mL or less, 0.65 g/mL or less, or 0.60 g/mL or less, and may be 0.05 g/mL or more or 0.1 g/mL or more, but is not limited thereto. If the tap density of the porous carbon support is too low, process control is difficult during silane gas deposition, which may result in a decrease in yield. In addition, if the tap density of the porous carbon support is too high, uniform coating may be difficult during silane gas deposition.

In one example of the present invention, the BET specific surface area of the porous carbon support according to the present invention may be in a range of 300 $m^2$/g or more and/or 3,000 $m^2$/g. The BET specific surface area of the porous carbon support may be a value measured by using ASAP 2420 (Micromeritics instrument (USA)). Specifically, the analysis was performed after vacuum drying at 300°C for 5 hours, and the BET equation and the BJH equation may be calculated by using the N2/77K Isotherm adsorption results according to ISO9277. The BET surface area of the porous carbon support may be 300 $m^2$/g or more, 400 $m^2$/g or more, or 500 $m^2$/g or more, and may be 3,000 $m^2$/g or less, 2,800 $m^2$/g or less, 2,600 $m^2$/g or less, or 2,000 $m^2$/g or less, but is not limited thereto. If the BET surface area of the porous carbon support is excessively low, the ratio of macropores may increase, which may lower the mechanical strength of the negative electrode material and may result in a lack of effective pores. In addition, if the BET surface area of the porous carbon support is too high, the ratio of micropores may increase, and silicon may not be sufficiently deposited into the core of the porous carbon support.

In an embodiment of the present invention, the diameter of the porous carbon support according to the present invention may be 20 $\mu$m or less. The above diameter may refer to the D50 diameter and may be a value measured by using a MICROTRAC S3500 device. Specifically, it may refer to an average value obtained by dispersing the porous carbon support in ethanol and then performing particle size analysis three times. The diameter of the porous carbon support may be 20 $\mu$m or less, 18 $\mu$m or less, 16 $\mu$m or less, 14 $\mu$m or less, 12 $\mu$m or less or 10 $\mu$m or less, and may be 1 $\mu$m or more, 2 $\mu$m or more or 3 $\mu$m or more, but is not limited thereto. If the diameter of the porous carbon support is too small, when performing coating, silicon may be quickly filled inside and then additional coating may be performed on the surface such that the surface coating layer may be formed thickly. In this case, deterioration may be accelerated during charge and discharge, and the agglomeration of materials having small particle sizes may occur when manufacturing an electrode, and deterioration of the agglomerated portion may be significant. In addition, if the diameter of the porous carbon support is too large, it may be difficult for silane gas to diffuse into the interior of the porous carbon support, making it difficult to form a uniform silicon coating layer inside the support. In addition, if the diameter of the porous carbon support is too large, it may be difficult to uniformly coat a slurry on the current collector during electrode manufacturing, which may reduce the uniformity of capacity.

In one example, the porous carbon support according to the present invention may include macropores having a diameter exceeding 50 nm. In this case, the ratio of the volume of the macropores to the volume of the total pores of the porous carbon support may be 0.4 or less. The ratio of the volume of the macropores to the volume of the total pores of the porous carbon support may be 0.40 or less, 0.38 or less, 0.36 or less, 0.34 or less, 0.32 or less, or 0.30 or less, but is not limited thereto. The lower limit of the ratio of the volume of the macropores to the volume of the total pores of the porous carbon support is not particularly limited, but may be, for example, 0 or more or more than 0. When the ratio of the macropores of the porous carbon support is too high, the mechanical strength of the negative electrode material manufactured with the porous carbon support may be reduced. In addition, the local agglomeration of silicon occurs inside the negative electrode material, which may cause stress due to volume expansion during repeated charge/-discharge processes, thereby causing damage to the negative electrode material.

In one example, silicon may be arranged on the surface and inside the pores of the porous carbon support according to the present invention. The silicon may be formed by deposition as described above. Since the porous carbon support according to the present invention has the above structure, the negative electrode material manufactured with the porous carbon support according to the present invention may have high electrical capacity while minimizing the influence due to volume expansion of silicon.

In another example, the content of the deposited silicon may be 10 wt% or more based on the weight of the total particle. The content of the silicon may be a value obtained by analysis using an energy dispersive spectrometer (EDS). The content of the deposited silicon may be 10 wt% or more, 15 wt% or more, 20 wt% or more, 25 wt% or more or 30 wt% or more, but is not limited to. In addition, the content of the deposited silicon may be 60 wt% or less, 58 wt% or less, 56 wt% or less, 54 wt% or less, 52 wt% or less or 50 wt% or less, but is not limited to. If the content of the deposited silicon is too small, the electric capacity may be reduced. In addition, if the content of the silicon is too large, the problem caused by the volume expansion of the silicon during charge and discharge may not be solved, which may cause structural damage to the negative electrode material and deteriorate the cycle characteristics.

In addition, the present invention relates to a battery negative electrode material including the porous carbon support described above. The battery negative electrode material including the porous carbon support according to the present invention may have improved mechanical strength along with high electric capacity and excellent cycle characteristics.

The method for manufacturing the battery negative electrode material is not particularly limited, and a general method for manufacturing a battery negative electrode material may be used. For example, the battery negative electrode material may be manufactured by mixing a porous carbon support, an active material, a conductive agent and a binder, and coating/drying/rolling the mixture on a member such as an electrode current collector, but is not limited thereto.

In addition, the present invention relates to a battery including the above-described battery negative electrode material. The battery including the battery negative electrode material according to the present invention may be a lithium-ion battery or an all-solid-state battery, but is not limited thereto.

The lithium-ion battery may specifically include a positive electrode, a negative electrode, a separator and an electrolyte. In this case, the negative electrode may include the above-described battery negative electrode material. The positive electrode may use a material that is usable in a lithium-ion battery, and may include, for example, one or more positive electrode active materials selected from doped or undoped lithium nickel oxide, lithium cobalt oxide, lithium cobalt aluminum oxide, lithium nickel cobalt manganese oxide, lithium manganese oxide and lithium nickel cobalt aluminum oxide, and a positive electrode current collector selected from aluminum, stainless steel, nickel, titanium, platinum or an alloy thereof, but is not limited thereto. In addition, the separator may use a typical separator that is usable in a lithium-ion battery. The separator may include, for example, one or more selected from glass fiber, polyester, Teflon, polyethylene, polypropylene and polytetrafluoroethylene (PTFE), but is not limited thereto.

The negative electrode of the lithium-ion battery may include the above-described battery negative electrode material. The negative electrode may include a negative electrode current collector and a battery negative electrode material, and the negative electrode current collector may include one or more selected from aluminum, stainless steel, nickel, titanium, platinum or an alloy thereof, but is not limited thereto.

The electrolyte of the lithium-ion battery may include an organic liquid electrolyte, an inorganic liquid electrolyte, a polymer electrolyte or a molten inorganic electrolyte usable in a lithium-ion battery, but is not limited thereto.

The all-solid-state battery may specifically include a positive electrode, a negative electrode and a solid electrolyte, and may further include a separator if necessary, but is not limited thereto. The positive electrode may include the above-described positive electrode active material, and may further include a positive electrode current collector if necessary, but is not limited thereto.

The negative electrode may include a battery negative electrode material according to the present invention. The negative electrode may have a single-layer structure including the battery negative electrode material, or may further include an anode current collector if necessary, but is not limited thereto.

The solid electrolyte may selectively use a solid electrolyte that is usable in an all-solid-state battery. The solid electrolyte may be at least one selected from the group consisting of, for example, Garnet-type, Nasicon-type, LISICON-type, perovskite-type and LiPON-type, but is not limited thereto.

## MODES OF THE INVENTION

Hereinafter, preferred examples are presented to help understand the present invention. However, the following examples are provided only to help understand the present invention more easily, and the content of the present invention is not limited by the following examples.

Example 1: Production of porous carbon support

300 g of petroleum residual oil (YNCC, HTC PFO (pyrolysis fuel oil)) was placed in a reactor equipped with a stirrer, and pyrolysis and condensation polymerization were performed while supplying nitrogen at a flow rate of 100 mL/min. In this case, the stirrer was rotated at a speed of 200 rpm to mix the reactants. The polymerized pitch was solidified and pelletized to obtain solid-phase pitch pellets having an average particle size of 1 to 30 mm.

After pulverizing the solid-phase pitch pellets obtained above, the pulverized powder was introduced into a rotary kiln having three zones to sequentially perform stabilization, carbonization and activation.

Thereafter, the porous carbon support of a first powder, for which the activation had been completed, was re-pulverized using a pulverizer (NETZSCH, Air Jet Mill) to produce a porous carbon support of a second powder.

Examples 2 to 4 and Comparative Examples 1 to 4

Porous carbon supports were produced under the same conditions as Example 1, except that pyrolysis and condensation polymerization were performed under the conditions described in Table 1 below. The stabilization of Examples 1 to 4 and Comparative Examples 1 to 4 was performed at a temperature 50 °C higher than the softening point, respectively.

[Table 1]

| Sample Name | Example | | | | Comparative Example | | | |
|---|---|---|---|---|---|---|---|---|
| | Example 1 | Example 2 | Example 3 | Example 4 | Comparative Example 1 | Comparative Example 2 | Comparative Example 3 | Comparative Example 4 |
| Temperature of Condensation Polymerization (°C) | 350 | 370 | 390 | 420 | 430 | 430 | 440 | 450 |
| Time of Condensation Polymerization (hr) | 3 | 3 | 3 | 3 | 5 | 3 | 3 | 3 |
| Softening Point (SP, °C) | 226 | 241 | 250 | 259 | 172 | 191 | 299 | 237 |

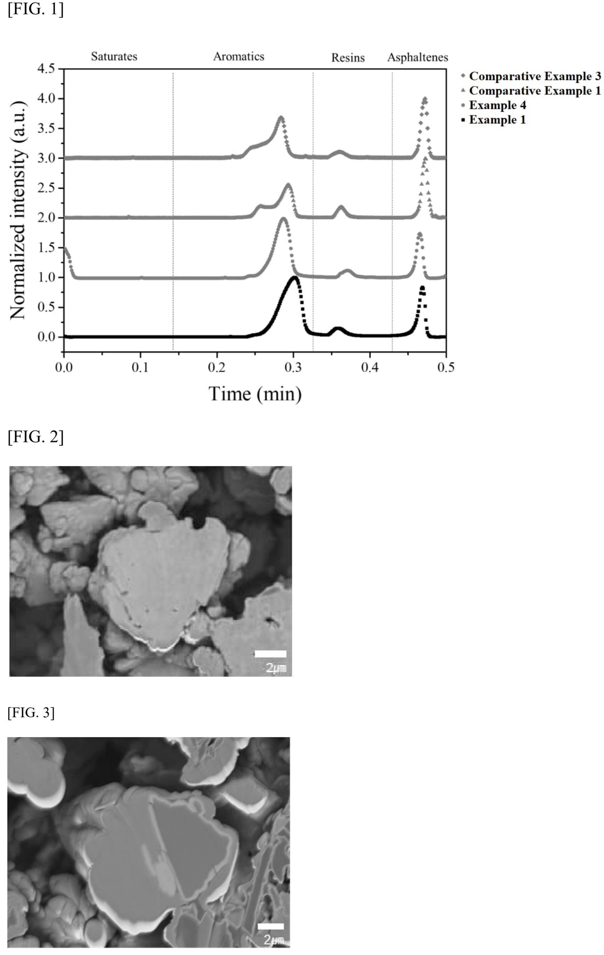

Test Example 1: SARA analysis SARA analysis was performed on the pitches obtained in the production examples. Chromarod S-5 was loaded on the chroma-rod holder, and a sample (10 to 15 mg/mL) dissolved in dichloromethane was spotted. Referring to the spot guide, 1 $\mu$L was dropped 7 to 8 times using a micro-pipette. After drying the chroma-rod holder, it was placed in a tank filled with a developing solvent and developed. In this case, hexane, toluene and methanol/dichloromethane (5:95) were used in that order. The dried chroma-rod holder was mounted on the IATROSCAN MK-6, and a scan was performed for 30 seconds. At the same time, the Clarity program on the connected PC was executed, and then, analysis was performed, and the results are shown in FIG. 1.

Test Example 2: Measurement of anisotropy

High-temperature centrifugation was performed on the pitches obtained in the production examples. 0.6 g of pulverized pitch was placed in a glass tube with an inner diameter of 6 mm, an outer diameter of 8 mm and a height of 90 to 100 mm, and two or four tubes were balanced and placed inside a high-temperature centrifuge. The heater temperature of the high-temperature centrifuge was set to 410°C, and the temperature was increased at a rate of 15°C per minute. After the heater reached the target temperature and about 30 minutes later, when the internal actual temperature reached 350 to 360°C, centrifugation was performed at 1,787 to 3,096 rpm (500 to 1,500 g) for 15 to 30 minutes. The tube containing the centrifuged pitch was cut to 23 to 28 mm from the bottom, cured with epoxy resin, and then polished using a Tegramin-25 polisher. The polished cross-section was photographed under a polarizing microscope, and the anisotropic/isotropic areas were manually designated using the ImageJ program, and the ratio of the anisotropic area to the total area was calculated.

[Table 2]

| Sample Name | Example | | | | Comparative Example | | | |
|---|---|---|---|---|---|---|---|---|
| | Example 1 | Example 2 | Example 3 | Example 4 | Comparative Example 1 | Comparative Example 2 | Comparative Example 3 | Comparative Example 4 |
| S | 0 | 0 | 0 | 0.07 | 0.73 | 1.60 | 0.61 | 0.55 |
| A | 70.45 | 69.65 | 67.10 | 68.89 | 57.14 | 66.07 | 62.17 | 60.28 |
| R | 8.48 | 8.79 | 8.77 | 6.41 | 11.08 | 7.29 | 6.78 | 11.75 |
| A | 21.07 | 21.56 | 24.13 | 24.66 | 31.06 | 25.04 | 30.44 | 27.43 |
| Ratio of Anisotropy | 0 | 0 | 0 | 0 | 0.18 | 0.23 | 0.62 | 0.51 |
| $S/S_P \times 100 + MP$ | 0 | 0 | 0 | 0.03 | 0.60 | 1.07 | 0.82 | 0.74 |

(continued)

| | Example | | | | Comparative Example | | | |
|---|---|---|---|---|---|---|---|---|
| Sample Name | Example 1 | Example 2 | Example 3 | Example 4 | Comparative Example 1 | Comparative Example 2 | Comparative Example 3 | Comparative Example 4 |
| Carbonization Yield (wt%) | 57.3 | 61.7 | 62.8 | 63.2 | 52.3 | 53.3 | 62.7 | 63.8 |
| Stabilization | O | O | O | O | X | X | O | O |

Test Example 3: Measurement of the physical properties of porous carbon supports The specific surface area of the porous carbon supports was measured using Belsorp mini II according to ASTM D4820-93. The tap density of the carbon supports was measured using a tap density analyzer (Electrolab, ETD-1020x) according to ASTM B527. The average particle size of the carbon supports was measured using a particle size analyzer (Horiba, laser particle analyzer, LA-960V2) according to ASTM E112.

[Table 3]

| Sample Name | Example 1 | Example 2 | Example 3 | Example 4 | Comparative Example 1 | Comparative Example 2 | Comparative Example 3 | Comparative Example 4 |
|---|---|---|---|---|---|---|---|---|
| Specific Surface Area ($m^2/g$) | 1490 | 1480 | 1450 | 1540 | - | - | 1079 | 970 |
| Total Pore Content ($cm^3/g$) | 0.74 | 0.73 | 0.75 | 0.81 | - | - | 0.53 | 0.91 |
| Micropore s ($cm^3/g$) | 0.48 | 0.48 | 0.44 | 0.47 | - | - | 0.36 | 0.34 |
| Mesopores ($cm^3/g$) | 0.26 | 0.25 | 0.31 | 0.34 | - | - | 0.17 | 0.57 |
| Ratio of Mesopores (%) | 35.1 | 34.2 | 41.3 | 42.0 | - | - | 32.0 | 62.6 |
| Yield (wt%) | 30.7 | 39 | 25.7 | 24.7 | - | - | 14.5 | 35.7 |

The evaluation results in Table 3 above show the measurement values of the porous carbon support of the primary powder, and in the case of Comparative Examples 1 and 2, stabilization was not achieved and the porous carbon support was not produced because it was melted.

Experimental Example 1: Electrochemical evaluation of secondary battery

Carbon-silicon composite particles were manufactured using the porous carbon support produced in Example 4. 15 to 20 g of the porous carbon support powder of Example 4 was placed in a rotary kiln, and silane ($SiH_4$) gas was injected to coat the porous carbon support.

The pressure during the silane gas coating was performed at atmospheric pressure, and the coating was performed for 1 hour at a temperature of 475°C and a flow rate of 300 sccm to manufacture carbon-silicon composite particles coated with silicon on the porous carbon support.

A half coin cell was manufactured using the carbon-silicon composite particles manufactured above. The manufacturing conditions of the half coin cell are as shown in Table 4 below.

[Table 4]

| Composition (AM:CM:BM) | 8:1:1 |
|---|---|

(continued)

| Area Capacity (mAh/cm$^2$) | 1 |
|---|---|
| Electrolyte | 1.3 M LiPF6 EC/EMC/DMC 3:5:2, FEC 10%, LiBF4 0.2%, 0.5% VC, 1% PS |
| Cut-off Voltage (V) | Formation: 0.005-1.5V, Cycle Test: 0.005-1.2V |
| C-rate (C) | Formation: 0.1-0.1, 0.01C cut-off (CV) at 0.005V |

In Table 4 above, AM, CM and BM represent the active material (silane-deposited porous carbon support), conductor (Super P carbon black) and binder (styrene-butadiene rubber/carboxymethyl cellulose 5:5), respectively, and EC, EMC, DMC, FEC, VC and PS represent ethylene carbonate, ethyl methyl carbonate, dimethyl carbonate, fluoroethylene carbonate, vinylene carbonate and propane sultone, respectively.

Experimental Examples 2 and 3

Carbon-silicon composite particles were manufactured in the same manner as in Experimental Example 1, except that the porous carbon supports produced in Comparative Examples 3 and 4, respectively, were used, and half coin cells were manufactured using the same.

[Table 5]

| | | Experimental Example 1 | Experimental Example 2 | Experimental Example 3 |
|---|---|---|---|---|
| Physical Properties of Carbon Support Before Coating | Average Particle Size ($\mu$m) | 7.2 | 7.0 | 8.4 |
| | Specific Surface Area (m$^2$/g) | 988.6 | 955.3 | 1001.3 |
| | Tap Density (g/mL) | 0.43 | 0.45 | 0.48 |
| Physical Properties of Carbon Support After Coating | Average Particle Size ($\mu$m) | 7.8 | 12.7 | 9.6 |
| | Specific Surface Area (m$^2$/g) | 5.3 | 1.5 | 92.4 |
| | Tap Density (g/mL) | 0.64 | 0.63 | 0.66 |
| | Content of Silicon (wt%) | 39.7 | 31.6 | 24.4 |

Table 5 above compares the physical properties of the porous carbon supports of Example 4, Comparative Example 3 and Comparative Example 4 before and after silicon coating. As a result of coating silicon on the surface and inside the pores of the porous carbon supports in all of Experimental Examples 1 to 3, it can be seen that the comparative area decreased and the tap density increased after coating compared to before coating. Referring to Table 5 above, it can be confirmed that Experimental Example 1 using the porous carbon support of Example 4 showed a silicon coating amount of 39.7 wt%. On the other hand, Experimental Examples 2 and 3 using the porous carbon supports of Comparative Examples 3 and 4 showed silicon contents of 31.6 wt% and 24.4 wt%, respectively.

FIG. 2 is an SEM image of the carbon-silicon composite particles manufactured in Experimental Example 1, and FIG. 3 is an SEM image of the carbon-silicon composite particles manufactured in Experimental Example 2. FIGS. 2 and 3 were photographed in BSE mode, and as the atomic number increases, the output is brighter, and therefore, the bright parts in FIGS. 2 and 3 represent regions where Si was placed, and the dark parts represent regions where C was placed.

Referring to FIGS. 2 and 3, it can be confirmed that the inside of the particles was brighter in the case of Experimental Example 1 using the porous carbon support of Example 4 than in Experimental Example 2 using the porous carbon support of Comparative Example 3. In addition, it can be seen that the thickness of the Si region coated on the outside of the support was thicker in the case of Experimental Example 2 than in Experimental Example 1. Through this, it can be confirmed that Si was uniformly coated on the inside of the support in the case of Experimental Example 1. On the other hand, in the case of Experimental Example 2, it can be seen that a sufficient amount of Si was not coated on the inside of the support and was coated in a form accumulated on the outside surface.

In addition, the results of electrochemical analysis performed on the half coin cells manufactured in Experimental Examples 1 to 3 under the following conditions are shown in Table 6 below.

Cut off voltage (V): 0.005 - 1.5V (Formation), 0.005 - 1.2V (Cycle)
Formation C-rate (C): 0.1C lithiation, 0.1C delithiation
Cycle C-rate (C): 0.5C lithiation, 0.5C delithiation

[Table 6]

| | Charge Capacity (mAh/g) | Discharge Capacity (mAh/g) | ICE (%) | Cycle Retention (50 cycle) |
|---|---|---|---|---|
| Experimental Example 1 | 2352 | 2169 | 92.1 | 70.5 |
| Experimental Example 2 | 2269 | 2088 | 92.0 | 49.7 |
| Experimental Example 3 | 1975 | 1715 | 86.8 | 51.9 |

Referring to Table 6 above, it can be seen that Experimental Example 1 manufactured from the porous carbon support of Example 4 had more excellent performance in terms of initial charge efficiency (ICE) and discharge capacity than Experimental Example 3 manufactured from the porous carbon support of Comparative Example 4. Additionally, in the case of Experimental Example 1, the capacity retention rate was 70.5% after 50 charge/discharge experiments, but Experimental Examples 2 and 3 showed significantly lower results than Experimental Example 1, at 49.7% and 51.9%, respectively. Through this, it can be seen that when the porous carbon support according to an embodiment of the present invention is used, it is possible to manufacture a secondary battery having excellent characteristics such as initial charge/discharge capacity, initial charge efficiency and charge/discharge cycles.

Although the embodiments of the present invention have been described in detail above, the present invention is not limited by the above-described embodiments and the attached drawings, but is intended to be limited by the attached claims. Accordingly, various forms of substitution, modification and change may be made by those skilled in the art within the scope that does not depart from the technical idea of the present invention described in the claims, and this will also fall within the scope of the present invention.

## INDUSTRIAL APPLICABILITY

The present invention may provide a method for producing a porous carbon support, including (1) synthesizing pitch by pyrolysis and condensation polymerization of a petroleum-based raw material; (2) solidifying the pitch to obtain a solid-phase pitch; and (3) producing a carbon support from the solid-phase pitch, wherein the pitch in step (1) satisfies Relationship Formula 1 below:

$$[\text{Relationship Formula 1}]$$

$$S/S_P \times 100 + MP \leq 0.5$$

In Relationship Formula 1 above, S is the mass ratio of saturated hydrocarbons derived from a saturates-aromatics-resins-asphaltenes (SARA) analysis of the synthesized pitch, SP is a softening point of the pitch, and MP is the volume ratio of anisotropic (mesophase) content in the synthesized pitch.

## Claims

1.   A method for producing a porous carbon support, comprising:

(1) synthesizing pitch by pyrolysis and condensation polymerization of a petroleum-based raw material;
(2) solidifying the pitch to obtain a solid-phase pitch; and
(3) producing a carbon support from the solid-phase pitch,
wherein the pitch in step (1) satisfies Relationship Formula 1 below:

[Relationship Formula 1]

$$S/S_P \times 100 + MP \leq 0.5$$

wherein in Relationship Formula 1 above, S is the mass ratio of saturated hydrocarbons derived from a saturates-aromatics-resins-asphaltenes (SARA) analysis of the synthesized pitch, SP is a softening point of the pitch, and MP is the volume ratio of anisotropic (mesophase) content in the synthesized pitch.

2. The method of claim 1, wherein a condensation polymerization temperature of the synthesizing pitch in step (1) is within a range of 300°C or more and/or 450°C or less.

3. The method of claim 1, wherein a softening point of the pitch synthesized in step (1) is 200°C or more.

4. The method of claim 1, wherein a ratio of saturated hydrocarbons in the pitch synthesized in step (1) is 0.6 mass% or less based on the entire pitch.

5. The method of claim 1, wherein a ratio of asphaltene in the pitch synthesized in step (1) is 30 mass% or less based on the entire pitch.

6. The method of claim 1, wherein the (3) producing a carbon support comprises stabilizing, carbonizing and activating the solid-phase pitch.

7. The method of claim 1, further comprising:
depositing silicon on the porous carbon support.

8. The method of claim 7, wherein the depositing is performed at a temperature of 300°C or more and/or 600°C or less and under a silane ($SiH_4$) gas atmosphere of 50 sccm or more and/or 500 sccm or less.

9. The method of claim 7, wherein a content of the silicon is 10 wt% or more based on the weight of the entire support.

10. A porous carbon support produced by the method according to any one of claims 1 to 9.

11. A battery negative electrode material, comprising the porous carbon support of claim 10.

[FIG. 1]

[FIG. 2]

[FIG. 3]

[FIG. 4]

## INTERNATIONAL SEARCH REPORT

| | |
|---|---|
| | International application No.<br>**PCT/KR2023/021570** |

**A. CLASSIFICATION OF SUBJECT MATTER**

**C01B 32/33**(2017.01)i

According to International Patent Classification (IPC) or to both national classification and IPC

**B. FIELDS SEARCHED**

Minimum documentation searched (classification system followed by classification symbols)

C01B 32/33(2017.01); B01J 20/20(2006.01); C01B 32/10(2017.01); C01B 32/336(2017.01); H01G 11/06(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열분해(pyrolysis), 축중합(condensation polymerization), 피치(pitch), 탄소 지지체 (carbon support), 포화 탄화수소(saturated hydrocarbon), 연화점(softening point), 이방성 함량(mesophase content), 안정화 (stabilization), 탄화(carbonization), 활성화(activation), 규소(silicon), 증착(deposition), 실란 가스(silane gas), 전지 음극재 (battery anode material)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1860069 B1 (KOREA RESEARCH INSTITUTE OF CHEMICAL TECHNOLOGY) 23 May 2018 (2018-05-23)<br>See paragraphs [0013], [0037], [0072], [0079], [0120]-[0124], [0126], [0128], [0129], [0131] and [0133]; and claim 1. | 1-11 |
| Y | KR 10-2020-0065252 A (THE INDUSTRY & ACADEMIC COOPERATION IN CHUNGNAM NATIONAL UNIVERSITY (IAC)) 09 June 2020 (2020-06-09)<br>See paragraph [0027]; and claim 1. | 1-11 |
| Y | 조종훈 등. 열분해유 유래 피치로부터 이방성 미세구조 코크스 제조 및 특성 평가. Applied Chemistry for Engineering. 2021, vol. 32, no. 6, pp. 640-646 (CHO, Jong Hoon et al. Preparation and Characterization of Pitch based Coke with Anisotropic Microstructure Derived from Pyrolysis Fuel Oil.)<br>See abstract; page 643, right column and page 645, left column; and table 2. | 1-11 |
| Y | KR 10-2019-0122805 A (GROUP14 TECHNOLOGIES, INC.) 30 October 2019 (2019-10-30)<br>See paragraphs [0308] and [0309]; and claims 1 and 4. | 7-9 |

| ✓ Further documents are listed in the continuation of Box C. | ✓ See patent family annex. |
|---|---|

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/021570**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0110198 A (KOREA RESEARCH INSTITUTE OF CHEMICAL TECHNOLOGY) 07 September 2021 (2021-09-07) See entire document. | 1-11 |

Form PCT/ISA/210 (second sheet) (July 2022)

**INTERNATIONAL SEARCH REPORT**
**Information on patent family members**

International application No.

**PCT/KR2023/021570**

| Patent document cited in search report | | | Publication date (day/month/year) | Patent family member(s) | | | Publication date (day/month/year) |
|---|---|---|---|---|---|---|---|
| KR | 10-1860069 | B1 | 23 May 2018 | None | | | |
| KR | 10-2020-0065252 | A | 09 June 2020 | KR | 10-2596646 | B1 | 02 November 2023 |
| KR | 10-2019-0122805 | A | 30 October 2019 | CN | 110582823 | A | 17 December 2019 |
| | | | | CN | 116978701 | A | 31 October 2023 |
| | | | | EP | 3593369 | A1 | 15 January 2020 |
| | | | | JP | 2020-514231 | A | 21 May 2020 |
| | | | | JP | 2024-012371 | A | 30 January 2024 |
| | | | | JP | 7376360 | B2 | 08 November 2023 |
| | | | | KR | 10-2023-0128140 | A | 01 September 2023 |
| | | | | KR | 10-2571014 | B1 | 25 August 2023 |
| | | | | US | 11611071 | B2 | 21 March 2023 |
| | | | | US | 2020-0020935 | A1 | 16 January 2020 |
| | | | | US | 2023-327087 | A1 | 12 October 2023 |
| | | | | WO | 2018-165610 | A1 | 13 September 2018 |
| KR | 10-2021-0110198 | A | 07 September 2021 | KR | 10-2539683 | B1 | 02 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190093960
- US 4242196 A
- US 4340464 A